# EUROPEAN PATENT SPECIFICATION

(11) **EP 2 717 613 B1**
(45) Date of publication and mention of the grant of the patent: **06.02.2019**
(21) Application number: 12789124.0
(22) Date of filing: 06.04.2012
(51) Int. Cl.: H04W 24/02, H04W 24/10, H04W 16/18, H04W 24/08

(54) **METHOD, SYSTEM AND DEVICE FOR ACQUIRING DRIVE TEST DATA**
VERFAHREN, SYSTEM UND VORRICHTUNG ZUR ERFASSUNG VON TESTFAHRT-DATEN
PROCÉDÉ, SYSTÈME ET DISPOSITIF D'ACQUISITION DE DONNÉES DE TEST DE QUALITÉ DE SERVICE EN CONDUITE

(30) Priority: 26.05.2011 CN 201110138474
(43) Date of publication of application: 09.04.2014
(73) Proprietor: China Mobile Communications Corporation, Beijing 100032 (CN)
(72) Inventor: HU, Nan, Beijing 100032 (CN); HU, Zhenping, Beijing 100032 (CN); CUI, Chunfeng, Beijing 100032 (CN)
(74) Representative: Rutz, Andrea
(86) International application number: PCT/CN2012/073567
(87) International publication number: WO 2012/159500

(56) References cited:
- WO-A1-2009/109138
- WO-A1-2011/050846
- CN-A- 101 938 764
- CN-A- 101 938 772
- CN-A- 101 998 490
- ERICSSON ET AL: "Discussion on architecture for MDT", 3GPP DRAFT; R2-095779 MDT ARCHITECTURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050390267, [retrieved on 2009-10-06]
- HUAWEI: "Way forward for Minimization of Drive Test", 3GPP DRAFT; R2-094582, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090817, 17 August 2009 (2009-08-17), XP050352699, [retrieved on 2009-08-17]
- QUALCOMM INCORPORATED: "MDT architecture consideration", 3GPP DRAFT; R2-1001516, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. San Francisco, USA; 20100222, 16 February 2010 (2010-02-16), XP050421726, [retrieved on 2010-02-16]
- HUAWEI: "Description of the eNB involved solution for the minimization of drive-tests", 3GPP DRAFT; S5-093333 DESCRIPTION OF ENB INVOLVED SOLUTION FOR MINIMIZATION OF DRIVE TESTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Vancouver, Canada; 20090904, 4 September 2009 (2009-09-04), XP050399295, [retrieved on 2009-08-22]

## Description

### FIELD OF THE INVENTION

The invention relates to the filed of communication technology, an in particular to a method for acquiring drive test data, a system and device for acquiring drive test data.

### BACKGROUND OF THE INVENTION

In a wireless communication system, the performance of a wireless network has a direct influence on the communication of a user mobile terminal, hence performing test on the performance of the wireless network is the key point to ensure the service quality of the wireless communication system.

Presently, a Drive Test (DT) technology has been widely applied in the wireless communication system as an important means to test the performance of the wireless network. The performance of the wireless network can be evaluated by implementing the drive test technology in the wireless communication system, thereby providing reliable data support for the optimizing and maintaining network. The drive test means determining the performance of the network according to a testing result, by performing field testing on the network (for example, testing a parameter such as a pilot signal of a cell at different positions).

The conventional drive test is achieved mainly by continuously testing in a region to be tested by a drive test personnel and a vehicle equipped with a dedicated measuring apparatus, and the process needs to consume a great quantity of resource. In order to solve the problem, a Minimization of Drive Tests (MDT) technology is introduced in the LTE Rel-10 phase, an object of the MDT is to decrease the resource cost on drive test, by configuring a common terminal to participate in the drive test work at the network side.

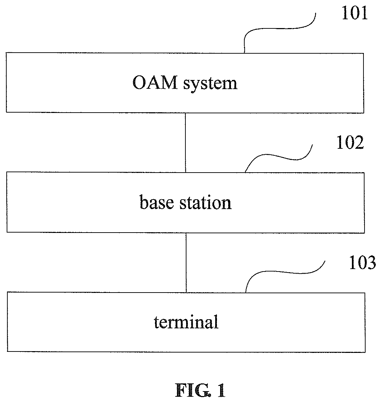

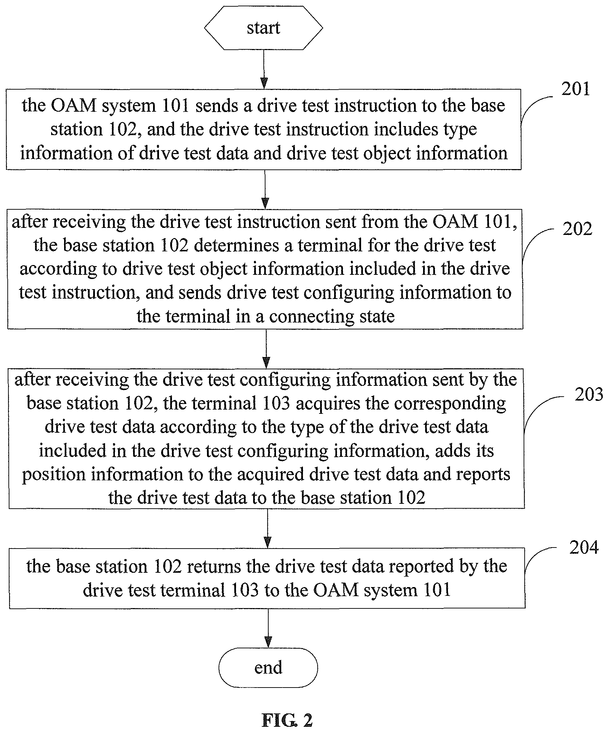

Figure 1 shows a schematic structural diagram of a MDT system. As shown in Figure 1, the MDT system mainly includes: an Operation Administration and Maintenance (OAM) system 101, a base station 102, and a terminal 103. Figure 2 shows a schematic flowchart of a drive test performed by the MDT system as shown in Figure 1. As shown in Figure 2, the drive test process mainly includes the following steps:

Step 201, the OAM system 101 sends a drive test instruction to the base station 102, and the drive test instruction includes type information of drive test data and drive test object information.

In step 201, the type of the drive test data is generally a parameter type related to the signal coverage, for example, the type of the drive test data may be downlink pilot strength. The drive test object may be a region for the drive test or a terminal for the drive test, if the drive test object is a region, it is necessary to collect the drive test data in the region; if the drive test object is a terminal, it is necessary to collect the data for the terminal as the drive test data.

Step 202, after receiving the drive test instruction sent from the OAM 101, the base station 102 determines a terminal for the drive test according to drive test object information included in the drive test instruction, and sends drive test configuring information to the terminal in a connecting state.

In step 202, a process of determining the terminal for the drive test according to the drive test object information included in the drive test instruction by the base station 102 includes: if the drive test object is a region, a terminal in the region is selected as the drive test terminal; if the drive test object is a terminal, the terminal is selected as the drive test terminal.

In step 202, the drive test configuring information sent by the base station 102 includes type information of drive test data to be acquired by the drive test terminal, the type information of the drive test data is the same as the type information of drive test data included in the drive test instruction sent by OAM 101.

Step 203, after receiving the drive test configuring information sent by the base station 102, the terminal 103 acquires the corresponding drive test data according to the type of the drive test data included in the drive test configuring information, adds its position information to the acquired drive test data and reports the drive test data to the base station 102.

Step 204, the base station 102 returns the drive test data reported by the drive test terminal 103 to the OAM system 101.

At this point, the MDT flow ends.

By performing the flow described above, the OAM system 101 can configure a common user terminal as the drive test terminal by the base station 102 and acquire the corresponding drive test data, thereby achieving the object for optimizing the performance of the network according to the drive test data. However, in practice, there are multiple types of parameters to influence the performance of the network, and the data collection ability of the common terminal is limited, hence only a parameter related to the signal coverage can be collected by means of the MDT technology, there are few of types of collected drive test data, thereby reducing the accuracy for optimizing the wireless communication network according to the drive test data.

Ericsson ET AL: "Discussion on architecture for MDT", 3GPP DRART; R2-095779, MDT ARCHITECTURE, 3GPP; FRANCE, no. Miyazaki; 20091012, 12 October 2009, XP050390267 analyzes different options to transport measurements for Minimization of Drive Tests. During the work to minimize drive tests in RAN2, it has become clear that there are at least two main alternatives for transport of the MDT measurements. The first alternative assumes a direct communication path between the UE and a MDT entity in the network. The second alternative assumes that the measurements are collected by the eNB and transmitted from the eNB to the O&M system.

WO2011/050846 discloses measures for enhancing network performance monitoring. Such measures may for example comprise receiving a report on measurements of terminal-related network performance parameters from a terminal, acquiring information of access network-related network performance parameters, and combining the received terminal-related network performance parameters and the acquired access network-related network performance parameters into a combined network performance report.

### SUMMARY OF THE INVENTION

In view of this, a method, a system and a device for acquiring drive test data are provided in the embodiments of the present invention. According to the technical solution, the data types of the collected drive test data are increased, thereby improving the accuracy for optimizing a wireless communication network according to the drive test data.

The invention is defined in the appended set of claims. The embodiments and/or examples of the following description which are not covered by the appended claims are considered as not being part of the present invention.

The embodiments of the invention are achieved by the following technical solutions.

According to an aspect of the embodiments of the present invention, there is provided a method for acquiring drive test data, including:
receiving, by a base station, a drive test instruction including type information of drive test data which is instructed to be acquired;
acquiring, by the base station, the drive test data corresponding to first type information, in the case where the drive test instruction includes the first type information of the drive test data acquired by the base station; and
   instructing, by the base station, a terminal to acquire drive test data corresponding to second type information and acquiring the drive test data acquired by the terminal, in the case where the drive test instruction includes the second type information of the drive test data acquired by the terminal;
   wherein the first type information is determined according to type information of data stored by a scheduler of the base station.

According to another aspect of the embodiments of the present invention, there is provided a system for acquiring drive test data, including:
a base station, configured to receive a drive test instruction including type information of drive test data which is instructed to be acquired; acquire the drive test data corresponding to first type information in the case where the drive test instruction includes the first type information of the drive test data acquired by the base station; instruct a terminal to acquire drive test data corresponding to second type information and acquire the drive test data acquired by the terminal in the case where the drive test instruction includes second type information of drive test data acquired by a terminal; and
a terminal, configured to acquire the drive test data corresponding to the second type information and report the acquired drive test data to the base station according to an instruction from the base station;
wherein the first type information is determined according to type information of data stored by a scheduler of the base station.

According to another aspect of the present invention, there is provided a device for acquiring drive test data, including:
a receiving unit, configured to receive a drive test instruction including type information of drive test data which is instructed to be acquired;
a first acquiring unit, configured to acquire the drive test data corresponding to first type information, in the case where the drive test instruction includes the first type information of the drive test data acquired by a base station; and
   a second acquiring unit, configured to instruct a terminal to acquire drive test data corresponding to second type information and acquiring the drive test data acquired by the terminal, in the case where the drive test instruction includes the second type information of the drive test data acquired by the terminal;
   wherein the first type information is determined according to type information of data stored by a scheduler of the base station.

According to at least one of the technical solutions provided in the embodiments of the present invention, after the base station receives the drive test instruction including the type information of drive test data which is instructed to be acquired, and in the case where the drive test instruction includes the first type information of the drive test data acquired by
the base station, the base station acquires the drive test data corresponding to the first type information; and in the case where the drive test instruction includes the second type information of the drive test data acquired by the terminal, the base station instructs the terminal to acquire the drive test data corresponding to the second type information, and acquires the drive test data corresponding to the second type information which is acquired by the terminal. According to the technical solution, a case that the drive test instruction includes multiple types of information of drive test data which is instructed to be acquired, and corresponding types of drive test data can be acquired by the base station can be supported; compared with the conventional way for acquiring drive test data only by a terminal, the types of the acquired drive test data are increased, thereby improving the accuracy for optimizing the wireless communication network according to the drive test data.

Other features and advantages of the present invention will be illustrated subsequently in the specification, and part of the other features and advantages become obviously from the specification or are known by implementing the invention. The objects and other advantages of the invention can be achieved and obtained by the structures particularly pointed out in the specification, the claims and the accompanying drawings.

### BRIEF DESCRIPTION OF THE DRAWINGS

The accompanying drawings are used to provide further understanding for the invention, and form a part of the description, the accompanying drawings are used to explain the invention along with the embodiments of the present invention, but are not intended to limit the present invention. In which:
Figure 1 is a schematic structural diagram of a Minimization of Drive Tests (MDT) system provided in the background;
Figure 2 is a schematic flowchart for achieving the MDT provided in the background;
Figure 3 is a schematic flowchart of a method for acquiring drive test data according to a first embodiment of the present invention;
Figure 4 is a schematic flowchart for acquiring drive test data corresponding to first type information by a base station according to the first embodiment;
Figure 5 a schematic flowchart for acquiring drive test data corresponding to second type information by a terminal based on an instruction from the base station according to the first embodiment;
Figure 6 is a schematic structural diagram of a device for acquiring drive test data according to a second embodiment of the present invention;
Figure 7 is a schematic structural diagram of another device for acquiring drive test data according to the second embodiment of the present invention;
Figure 8 is a schematic structural diagram of a system for acquiring drive test data according to a third embodiment; and
Figure 9 is a schematic structural diagram of another system for acquiring drive test data according to the third embodiment.

### DETAILED DESCRIPTION OF THE INVENTION

In order to achieve a solution for increasing the data types of the collected drive test data, a method, system and device for acquiring drive test data are provided according to the embodiments of the present invention. The preferred embodiments of the present invention are illustrated in conjunction with the accompanying drawings of the specification, it should be understood that, the preferred embodiments described herein are only used to illustrate and explain the invention and are not intended to limit the invention. In the case of no conflict, the embodiments in the application and the features in the embodiments may be combined each other.

### First embodiment

According to the first embodiment of the invention, it is provided a method for acquiring drive test data, by which a case that a drive test instruction includes multiple types of information of drive test data which is instructed to be acquired, and corresponding types of drive test data is acquired by a base station can be supported; compared with the conventional way for acquiring drive test data only by a terminal, the types of the acquired drive test data are increased, thereby improving the accuracy for optimizing the wireless communication network according to the drive test data.

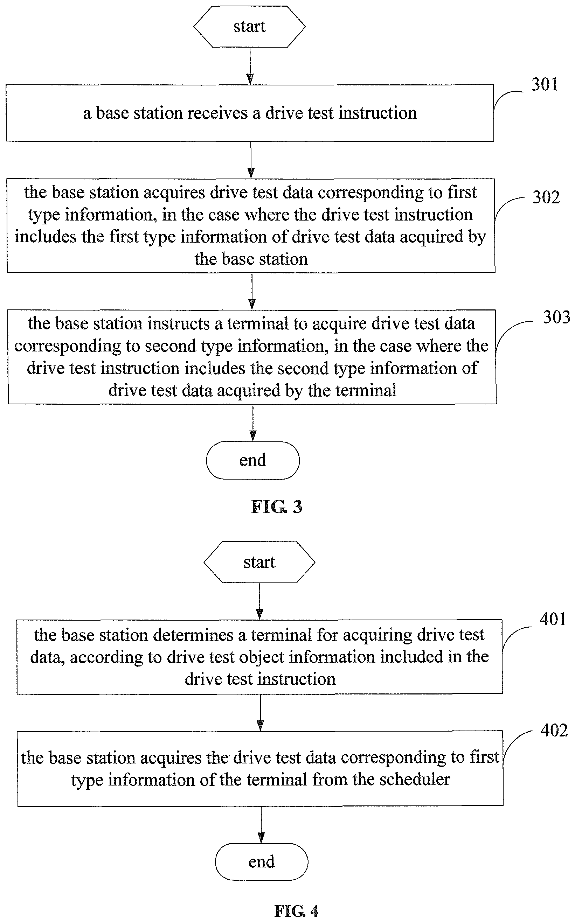

Figure 3 shows a schematic flowchart of a method for acquiring drive test data according to the first embodiment of the present invention. As shown in Figure 3, acquiring the drive test data mainly includes the following steps.

Step 301, a base station receives a drive test instruction.

In step 301, the drive test instruction received by the base station may include type information of drive test data which is to be acquired according to the instruction and drive test object information. The type information that may be included in the drive test instruction is mainly divided into two types: one type is first type information of drive test data acquired by the base station, the other type is second type information of drive test data acquired by a terminal. The drive test object information may be region information or terminal information.

Step 302, the base station acquires drive test data corresponding to first type information, in the case where the drive test instruction includes the first type information of drive test data acquired by the base station.

Step 303, the base station instructs a terminal to acquire drive test data corresponding to second type information, in the case where the drive test instruction includes the second type information of drive test data acquired by the terminal.

In step 303, the second type information of drive test data acquired by the terminal may be a parameter related to signal coverage quality, such as pilot signal strength, and terminal access delay. After instructing the terminal to acquire the drive test data corresponding to the second type information, the base station acquires the drive test data corresponding to the second type information which is acquired by the terminal.

To this point, the flow for acquiring the drive test data ends.

In the preferred embodiment provided in the first embodiment of the present invention, in the flow corresponding to Figure 3, the type information of drive test data which is to be acquired, which is included in the drive test instruction received by the base station, may include both the first type information of the drive test data acquired by the base station and the second type information of the drive test data acquired by the terminal. In this case, step 302 and step 303 described above may be simultaneously performed in performing drive test; and in practice, step 302 and step 303 described above may be performed simultaneously, also may be performed one after another. For example, step 302 may be performed firstly, then step 303 may be performed; or step 303 may be performed firstly, then step 302 may be performed.

The above embodiment, in which the test instruction includes both the first type information and the second type information, is only the preferred embodiment to achieve the embodiment of the present invention. In practice, the type information of drive test data which is to be acquire, which is included in the test instruction may be selected according to the actual test requirement of the system. For example, the drive test instruction may only include the first type information of the drive test data acquired by the base station, the drive test instruction may also only include the second type information of the drive test data acquired by the terminal, the specific situation is determined according to the actual drive test requirement, which is not listed here. Furthermore, after acquiring the drive test data corresponding to the type information of drive test data which is to be acquired, which is included in the drive test instruction, the base station may report the acquired drive test data to an OAM system; the OAM system may determine the performance of the network according to the drive test data reported by the base station, thereby optimizing the wireless network.

In the above embodiment of the present invention, the first type of the drive test data acquired by the base station is determined according to the type information of data included in a scheduler. The scheduler is a function unit for managing the wireless resource of the terminal within the base station, the main function of the scheduler is allocating time domain resource and frequency domain resource for a user in a connecting station, and determining the modulating mode and encoding mode employed by the terminal on the corresponding resource. Since when the terminal transmits data, parameters such as a throughput, a delay and a packet loss rate at different service levels may be completely determined by the modulating and encoding mode and the time domain resource frequency domain resource allocated to the terminal, the determining is performed by the scheduler. The present invention does not relate to calculating the throughput, the delay and the packet loss rate of the terminal at different service levels according to the time domain resource, frequency domain resource and the modulating and encoding mode, but directly extracts the related data from the scheduler. The scheduler may determine the parameters such as the throughput, the delay and the packer loss rate of the terminal at different service levels according to the corresponding resource allocated to the terminal, and stores the parameter information such as the throughput, the delay and the packet loss rate at different service levels corresponding to the terminal.

The first type of the drive test data acquired by the base station, which is determined by the base station according to the type information of data stored by the scheduler, is generally a parameter related to the network service quality, the parameter may include one or more of the following information:
information of throughput of the terminal at different service levels;
information of transmission delay of the terminal at different service levels; and
information of packet loss rate of the terminal at different service levels.

In step 302 included in the flow corresponding to Figure 3, the process for acquiring the drive test data corresponding to the first type information by the base station mainly includes the following steps, as shown in Figure 4:

Step 401, the base station determines a terminal for acquiring drive test data, according to drive test object information included in the drive test instruction.

In step 401, if the drive test object information includes region information, it is determined that the terminal for acquiring the drive test data is a terminal within a region corresponding to the region information. Specifically, it is determined that one or more terminals in the region may be used for acquiring the drive test data, and the specific way of determining may be determined flexibly; if the drive test object information includes terminal information, it is determined that the terminal for acquiring the drive test data is a terminal corresponding to the terminal information.

In step 402, the base station acquires the drive test data corresponding to first type information of the terminal from the scheduler.

In step 402, the base station acquires the data corresponding to the first type information as the drive test data, from the data which is stored by the scheduler and corresponds to the information of the terminal.

To this point, the flow for acquiring the drive test data corresponding to the first type information by the base station ends.

In yet another preferred embodiment provided in the first embodiment of the present invention, in step 302 described above, in the case where the drive test instruction includes the first type information of the drive test data acquired by the base station, the following steps are further performed:
the base station determines information of time at which the drive test data corresponding to the first type information is acquired, and identifies the acquired drive test data corresponding to the first type information by the information of the time; and/or
the base station determines a terminal for acquiring the drive test data according to the drive test object information included in the drive test instruction, determines the position information corresponding to the terminal for acquiring the drive test data, and identifies the acquired drive test data corresponding to the first type information by the position information.

In the step described above, determining the information of the position corresponding to the terminal for acquiring the drive test data by the base station may be specifically achieved by two ways: one way is that the base station instructs the terminal to obtain its position information by GNSS and to report the position information; the other way is that the base station determines the field strength of multiple cell signals with a same frequency in the region where the terminal is located, and determines the position of the terminal according to the corresponding relationship between the stored field strength and the position.

After performing the step described above, the base station further records the time information and/or the position information described above when acquiring the drive test data corresponding to the first type information. The recorded information is used to identify the acquired drive test data, thereby providing further theoretical foundation for optimizing the performance of the network. For example, the drive test data is identified by the position information, preferably the network of a region corresponding to the position information may be optimized when the network is optimized by the drive test data, thereby improving the accuracy of the network optimization.

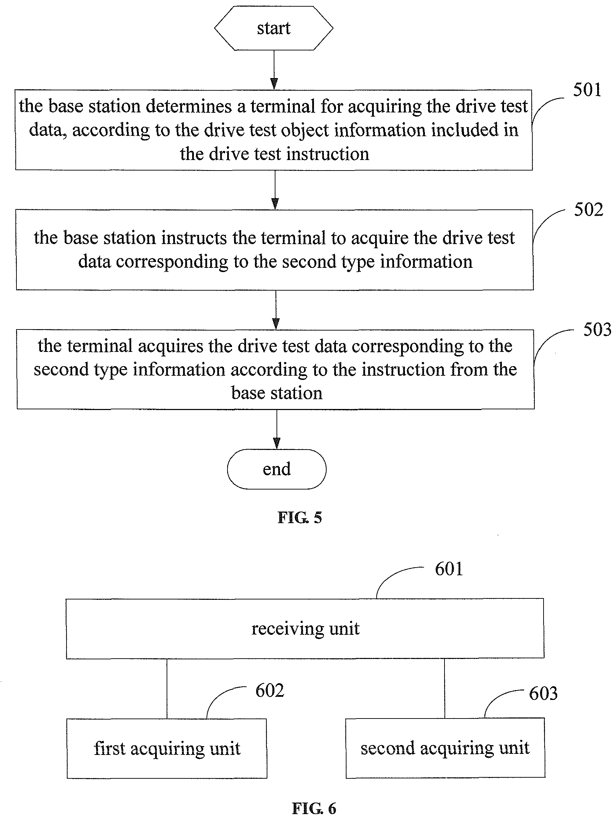

In step 303 included in the flow corresponding to Figure 3, the process for acquiring the drive test data corresponding to the second type information by the terminal according to the instruction from the base station, mainly includes the following steps, as shown in Figure 5:

Step 501, the base station determines a terminal for acquiring the drive test data, according to the drive test object information included in the drive test instruction.

The specific achieving process in step 501 is the same as the specific achieving process in step 401 described above, which will not be described in detail here.

Step 502, the base station instructs the terminal to acquire the drive test data corresponding to the second type information.

In step 502, the process for acquiring the drive test corresponding to the second type information by the terminal according to the instruction from the base station includes: the base station sends drive test configuring information to the terminal, the drive test configuring information includes the second type information of the drive test data to be acquired by the terminal.

Step 503, the terminal acquires the drive test data corresponding to the second type information according to the instruction from the base station.

To this point, the flow for acquiring the drive test data corresponding to the second type information by the terminal based on the instruction from the base station ends.

In still another preferred embodiment provided in the first embodiment of the present invention, in step 303 described above, in the case where the drive test instruction includes the second type information of the drive test data acquired by the terminal, the following steps are further performed:
the base station instructs the terminal to determine time information corresponding to the drive test data corresponding to the second type information, the time information is used to identify the drive test data corresponding to the second type information; and/or
the base station instructs the determined terminal to determine the position information of the terminal, the position information is used to identify the drive test data corresponding to the second type information.

After performing the steps described above, the drive test data received by the base station is the drive test data corresponding to the second type information, which is identified by the time information of the drive test data acquired by the terminal and/or the position information of the terminal, thereby providing further theoretical foundation for optimizing the performance of the network. For example, the drive test data is identified by the position information, preferably the network of a region corresponding to the position information may be optimized when the network is optimized by the drive test data, thereby improving the accuracy for optimizing the network. Identifying the drive test data corresponding to the second type information by the determined information (the time information and/or the position information) may be completed by the terminal or the base station.

The above technical solutions provided in the first embodiment of the present invention may be applied in the MDT system as shown in Figure 1, and the OAM system 101 sends the drive test instruction to the base station 102. Furthermore, the drive test instruction not only includes the type information of drive test data which is instructed to be acquired and the drive test object information, but also includes the duration information for the drive test (the duration information is an optional parameter); the duration information is used to instruct the valid time range for the drive test, i.e., the base station and/or the terminal is demanded to only acquire the drive test data within the time range, if it is beyond the time range, no drive test data is acquired or the acquired drive test data is invalid.

According to the technical solutions provided in the first embodiment of the present invention, the base station generates complete drive test log information by combining the collected drive test data, the collecting time for the drive test data and the position information of the drive test data collecting object together, and reports the drive test log information to the OAM system; the OAM system may optimize the wireless network according to the log.

### Second embodiment

Corresponding to the flow of the method for acquiring the drive test data provided in the first embodiment, according to a second embodiment of the present invention, it is provided a device for acquiring drive test data, the device may be located in a base station.

Figure 6 shows a schematic structural diagram of a device for acquiring drive test data provided in the second embodiment of the present invention. As shown in Figure 6, the device mainly includes:
a receiving unit 601, a first acquiring unit 602 and a second acquiring unit 603;
the receiving unit 601 is configured to receive a drive test instruction including type information of drive test data which is to be acquired;
the first acquiring unit 602 is configured to acquire drive test data corresponding to first type information, in the case where the drive test instruction received by the receiving unit 601 includes the first type information of drive test data acquired by a base station;
and the second acquiring unit 603 is configured to instruct a terminal to acquire drive test data corresponding to the second type information, and acquire the drive test data acquired by the terminal, in the case where the drive test instruction received by the receiving unit 601 includes second type information of the drive test data acquired by a terminal.

In the preferred embodiment provided in the second embodiment of the present invention, the first acquiring unit 602 included in the device as shown in figure 6 is specifically configured to acquire drive test data corresponding to the first type information, in the case where a drive test instruction includes first type information determined according to the type information of data stored by a scheduler of the base station.

In the preferred embodiment provided in the second embodiment of the present invention, the first acquiring unit 602 included in the device as shown in Figure 6 is specifically configured to, determine the information of the terminal for acquiring drive test data according to drive test object information included in the drive test instruction, and acquire data corresponding to the first type information, from the data stored by the scheduler which corresponds to the terminal information, as drive test data.

In the preferred embodiment provided in the second embodiment of the present invention, the first acquiring unit 602 included in the device as shown in Figure 6 is also configured to determine time information corresponding to the drive test data corresponding to the first type information in the case where the drive test instruction includes the first type information of the drive test data acquired by the base station, and identify the acquired drive test data corresponding to the first type information by the time information; and/or, determine a terminal for acquiring the drive test data according to the drive test object information included in the drive test instruction, determine the position information of the terminal, and identify the acquired drive test data corresponding to the first type information by the position information.

In the preferred embodiment provided in the second embodiment of the present invention, the second acquiring unit 603 included in the device as shown in Figure 6 is specifically configured to, determine information of terminal for acquiring drive test data according to drive test object information included in the drive test instruction, and instruct the terminal corresponding to the information of the terminal to acquire the drive test data corresponding to the second type information.

In the preferred embodiment provided in the second embodiment, the second acquiring unit 603 included in the device as shown in Figure 6 is also configured to in instruct a terminal to acquire information of time at which the drive test data corresponding to the second type information is acquired, in the case where the drive test instruction includes the second type information of drive test data acquired by the terminal, the time information is used to identify the drive test data corresponding to the second type information; and/or configured to instruct the terminal to determine the position information of the terminal, the position information is used to identify the drive test data corresponding to the second type information.

In the preferred embodiment provided in the second embodiment of the present invention, the receiving unit 601 included in the device as shown in Figure 6 is specifically configured to receive a drive test instruction sent from the OAM system.

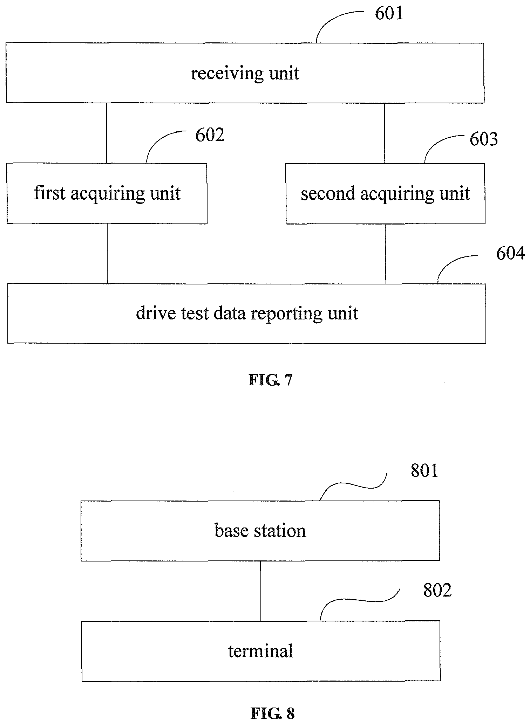

As shown in Figure 7, in the preferred embodiment provided in the second embodiment, the device shown in Figure 6 further includes a drive test data reporting unit 604 which is configured to send the acquired drive test data to the OAM system. Specifically, the drive test data reporting unit 604 is mainly configured to report the drive test data acquired by the first acquiring unit 602 and the second acquiring unit 603 to the OAM system.

The device described above may also be provided in a base station.

It should be understood that, the units included in the device for acquiring drive test data are logically divided only according to the function achieved by the device. In practice, the units described above may be integrated and split. Furthermore, the functions achieved by the device for acquiring drive test data according to the embodiment have an one-to-one corresponding relationship with the flow of the method for acquiring drive test data according to the first embodiment described above, the detailed processing flow implemented by the device has been described in detail in the first method embodiment described above, which will not be described in detail here.

Furthermore, the device for acquiring drive test data in the second embodiment further includes corresponding function modules which can implement the solutions of the first embodiment, which will not be described in detail here.

### Third embodiment

Corresponding to the flow of the method for acquiring drive test data provided in the first embodiment, according to a third embodiment of the present invention, it is provided a system for acquiring drive test data.

As shown in Figure 8, the system for acquiring drive test data provided in the third embodiment mainly includes:
a base station 801 and a terminal 802; in which:
the base station 801 is configured to receive a drive test instruction including type information of drive test data which is to be acquired; in the case where the drive test instruction includes first type information of the drive test data acquired by the base station, the base station is configured to acquire the drive test data corresponding to the first type information; and in the case where the drive test instruction includes second type information of drive test data acquired by a terminal, the base station is configured to instruct the terminal 802 to acquire the drive test data corresponding to the second type information, and acquire the drive test data corresponding to the second type information acquired by the terminal 802.

The terminal 802 is configured to acquire the drive test data corresponding to the second type information according to an instruction from the base station 801, and report the acquired drive test data to the base station 801,.

In the preferred embodiment provided in the third embodiment, the base station 801 included in the device as shown in Figure 8 is also configured to, in the case where the drive test instruction includes the first type information of the drive test data acquired by the base station, determine time information when acquiring the drive test data corresponding to the first type information, and identify the acquired drive test data corresponding to the first type information by the time information; and/or, determine a terminal for acquiring the drive test data according to the drive test object information included in the drive test instruction, determine the position information of the terminal and identify the acquired drive test data corresponding to the first type information by the position information.

In the preferred embodiment provided in the third embodiment of the present invention, the base station 801 included in the system as shown in Figure 8 is further configured to instruct the terminal to determine, in the case where the drive test instruction includes the second type information of the drive test data acquired by the terminal, instruct the terminal to determine time information when acquiring the drive test data corresponding to the second type information and/or determine the position information of the terminal.

Accordingly, the terminal 802 is further configured to determine the information that the base station instructs to determine, herein the determined information is used to identify the drive test data corresponding to the second type information.

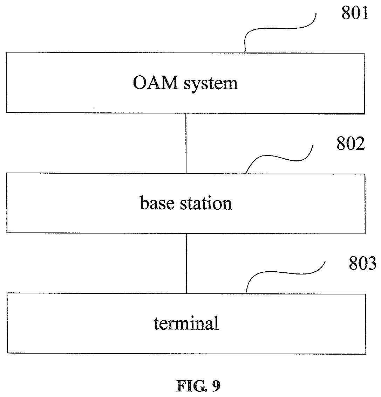

As shown in Figure 9, in the preferred embodiment provided in the third embodiment of the present invention, the system as shown in Figure 8 further includes an Operation Administration and Maintenance (OAM) system 803, which is configured to send a drive test instruction to the base station 801.

In the preferred embodiment according to the third embodiment, the base station 801 included in the system as shown in Figure 8 or Figure 9 is further configured to send the acquired drive test data to the OAM system included in the system.

The detailed functions achieved by the base station 801 included in the system for acquiring drive test data according to the third embodiment correspond to the device for acquiring drive test data provided in the second embodiment described above, which will not be described in detail here.

According to at least one technical solution provided in the embodiments of the present invention, after the base station receives the drive test instruction including the type information of drive test data which is instructed to be acquired, and in the case where the drive test instruction includes the first type information of the drive test data acquired by the base station, the base station acquires the drive test data corresponding to the first type information, and in the case where the drive test instruction includes the second type information of the drive test data acquired by the terminal, the base station instructs the terminal to acquire the drive test data corresponding to the second type information, and acquires the drive test data corresponding to the second type information which is acquired by the terminal. According to the technical solution, it is able to support a case that the drive test instruction includes multiple types of information of drive test data which is to be acquired, and corresponding types of drive test data can be acquired by the base station; compared with the conventional way for acquiring drive test data only by a terminal, the types of the acquired drive test data are increased, thereby improving the accuracy for optimizing the wireless communication network according to the drive test data.

Although the preferred embodiments of the invention are described, those skilled in the art may make variations and modifications to these embodiments once they obtain the basic creative concepts. Therefore, the attached claims are intended to include the preferred embodiments and all the variations and modifications fell within the scope of protection of the application.

Obviously, those skilled in the art may make various changes and modifications to the invention without departing from the scope of the invention, which is defined by the appended claims.

## Claims

1. A method for acquiring drive test data, **characterized by** comprising:
receiving (301), by a base station, a drive test instruction comprising type information of the drive test data which is instructed to be acquired;
acquiring (302), by the base station, the drive test data corresponding to first type information, in the case where the drive test instruction comprises the first type information of the drive test data acquired by the base station; and
instructing (302), by the base station, a terminal to acquire drive test data corresponding to second type information and acquiring the drive test data acquired by the terminal, in the case where the drive test instruction comprises the second type information of the drive test data acquired by the terminal;
wherein the first type information is determined according to type information of data stored by a scheduler of the base station.

2. The method according to claim 1,
wherein the first type information comprises one or more of the following information:
information of throughput of the terminal at different service levels;
information of transmission delay of the terminal at different service levels; and
information of packet loss rate of the terminal at different service levels.

3. The method according to claim 2, wherein the acquiring, by the base station, drive test data corresponding to first type information comprises:
determining (401), by the base station, information of the terminal for acquiring the drive test data, according to drive test object information comprised in the drive test instruction; and
acquiring (402), by the base station, data corresponding to the first type information, from the data stored by the scheduler which corresponds to the information of the terminal, as the drive test data.

4. The method according to any of claims 1 to 3, wherein in the case where the drive test instruction comprises the first type information of the drive test data acquired by the base station, the method further comprises:
determining, by the base station, information of time at which the drive test data corresponding to the first type information is acquired, and identifying the acquired drive test data corresponding to the first type information by the information of the time; and/or
determining, by the base station, information of the terminal for acquiring the drive test data, according to the drive test object information comprised in the drive test instruction, determining information of a position where the terminal is currently located, and identifying the acquired drive test data corresponding to the first type information by the information of the position.

5. The method according to claim 1, wherein the instructing, by the base station, a terminal to acquire drive test data corresponding to the second type information comprises:
determining (501), by the base station, information of the terminal for acquiring the drive test data, according to the drive test object information comprised in the drive test instruction; and
instructing (502), by the base station, the terminal corresponding to the determined information of the terminal to acquire the drive test data corresponding to the second type information.

6. The method according to claim 1 or 5, wherein in the case where the drive test instruction comprises the second type information of the drive test data acquired by the terminal, the method further comprises:
instructing, by the base station, the terminal to determine information of time at which the drive test data corresponding to the second type information is acquired; and/or
instructing, by the base station, the terminal to determine information of a position where the terminal is currently located, wherein the information of the position is used to identify the drive test data corresponding to the second type information.

7. The method according to claim 3 or 5, wherein the drive test object information comprised in the drive test instruction comprises region information or terminal information;
in the case where the drive test object information comprises the region information, the determined information of the terminal for acquiring the drive test data is information of a terminal within a region corresponding to the region information; and
in the case where the drive test object information comprises the terminal information, the determined information of the terminal for acquiring the drive test data is terminal information comprised in the drive test object information.

8. A system for acquiring drive test data, **characterized by** comprising:
a base station (801), configured to receive a drive test instruction comprising type information of drive test data which is instructed to be acquired; acquire the drive test data corresponding to first type information in the case where the drive test instruction comprises the first type information of the drive test data acquired by the base station; instruct a terminal to acquire drive test data corresponding to second type information and acquire the drive test data acquired by the terminal in the case where the drive test instruction comprises second type information of drive test data acquired by a terminal; and
a terminal (802), configured to acquire the drive test data corresponding to the second type information and report the acquired drive test data to the base station according to an instruction from the base station;
wherein the first type information is determined according to type information of data stored by a scheduler of the base station.

9. A device for acquiring drive test data, **characterized by** comprising:
a receiving unit (601), configured to receive a drive test instruction comprising type information of the drive test data which is instructed to be acquired;
a first acquiring unit (602), configured to acquire the drive test data corresponding to first type information, in the case where the drive test instruction comprises the first type information of the drive test data acquired by the base station; and
a second acquiring unit (603), configured to instruct a terminal to acquire drive test data corresponding to second type information and acquire the drive test data acquired by the terminal, in the case where the drive test instruction comprises the second type information of the drive test data acquired by the terminal;
wherein the first type information is determined according to type information of data stored by a scheduler of the base station.

10. The device according to claim 9, wherein the first acquiring unit is configured to:
acquire the drive test data corresponding to the first type information, in the case where the drive test instruction comprises the first type information determined according to the type information of data stored by a scheduler of the base station.

11. The device according to claim 10, wherein the first acquiring unit is configured to:
determine information of the terminal for acquiring the drive test data according to drive test object information comprised in the drive test instruction, and acquire data corresponding to the first type information, from the data stored by the scheduler which corresponds to the information of the terminal, as drive test data.

12. The device according to claim 9 or 11, wherein the first acquiring unit is also configured to, in the case where the drive test instruction comprises the first type information of the drive test data acquired by the base station, determine information of time at which the drive test data corresponding to the first type information is acquired and identify the acquired drive test data corresponding to the first type information by the information of the time; and/or determine information of the terminal for acquiring drive test data according to the drive test object information comprised in the drive test instruction, determine information of a position where the terminal corresponding to the terminal information is currently located, and identify the acquired drive test data corresponding to the first type information by the information of the position.

13. The device according to claim 9, wherein the second acquiring unit is configured to:
determine information of the terminal for acquiring drive test data according to the drive test object information comprised in the drive test instruction, and instruct the terminal corresponding to the determined information of the terminal to acquire the drive test data corresponding to the second type information.

14. The device according to claim 9 or 13, wherein the second acquiring unit is further configured to:
in the case where the drive test instruction comprises the second type information of drive test data acquired by the terminal, instruct the terminal to determine information of time information at which the drive test data corresponding to the second type information is acquired, wherein the time information is used to identify the drive test data corresponding to the second type information; and/or instruct the terminal to determine information of a position where the terminal is currently located, wherein the information of the position is used to identify the drive test data corresponding to the second type information.

15. A base station, comprising the device according to any one of claims 9 to 14.

## Patentansprüche

1. Ein Verfahren zum Erfassen von Drive-Test-Daten, **dadurch gekennzeichnet, dass** es aufweist:
Empfangen (301), durch eine Basisstation, einer Drive-Test-Instruktion, welche Typeninformation der Drive-Test-Daten aufweist, die zur Erfassung instruiert werden;
Erfassen (302), durch die Basisstation, der Drive-Test-Daten, welche der ersten Typeninformation entsprechen, im Falle, dass die Drive-Test-Instruktion die erste Typeninformation der durch die Basisstation erfassten Drive-Test-Daten aufweist; und
Instruieren (302), durch die Basisstation, eines Terminals zum Erfassen von Drive-Test-Daten, welche der zweiten Typeninformation entsprechen, und Erfassen der vom Terminal erfassten Drive-Test-Daten, im Falle, dass die Drive-Test-Instruktion die zweite Typeninformation der durch das Terminal erfassten Drive-Test-Daten aufweist;
wobei die erste Typeninformation gemäss der Typeninformation der von einem Scheduler der Basisstation gespeicherten Daten bestimmt wird.

2. Das Verfahren gemäss Anspruch 1,
wobei die erste Typeninformation eine oder mehrere der folgenden Information aufweist:
Information über den Durchsatz des Terminals bei unterschiedlichen Servicelevels;
Information über die Übertragungsverzögerung des Terminals bei unterschiedlichen Servicelevels; sowie
Information über die Paketverlustrate des Terminals bei unterschiedlichen Servicelevels.

3. Das Verfahren gemäss Anspruch 2, wobei das Erfassen, durch die Basisstation, der der ersten Typeninformation entsprechenden Drive-Test-Daten aufweist:
Bestimmen (401), durch die Basisstation, von Information des Terminals zum Erfassen der Drive-Test-Daten, gemäss Drive-Test-Objekt-Information, welche in der Drive-Test-Instruktion enthalten sind; sowie
Erfassen (402), durch die Basisstation, von Daten, welche der ersten Typeninformation entsprechen, von den Daten, die durch den Scheduler gespeichert werden, welche der Information des Terminals entsprechen, als Drive-Test-Daten.

4. Das Verfahren gemäss einem der Ansprüche 1 bis 3, wobei im Falle, dass die Drive-Test-Instruktion die erste Typeninformation der durch die Basisstation erfassten Drive-Test-Daten enthält, das Verfahren ausserdem aufweist:
Bestimmen, durch die Basisstation, von Information der Zeit, zu welcher die der ersten Typeninformation entsprechenden Drive-Test-Daten erfasst werden, und Identifizieren der der ersten Typeninformation entsprechenden, erfassten Drive-Test-Daten mittels der Information der Zeit; und/oder
Bestimmen, durch die Basisstation, von Information des Terminals zum Erfassen der Drive-Test-Daten, gemäss der Drive-Test-Objekt-Information, welche in der Drive-Test-Instruktion enthalten ist, Bestimmen von Information einer Position, an welcher das Terminal gerade angeordnet ist, und Identifizieren der der ersten Typeninformation entsprechenden, erfassten Drive-Test-Daten mittels der Information der Position.

5. Das Verfahren gemäss Anspruch 1, wobei das Instruieren, durch die Basisstation, eines Terminals zum Erfassen von der zweiten Typeninformation entsprechenden Drive-Test-Daten aufweist:
Bestimmen (501), durch die Basisstation, von Information des Terminals zum Erfassen von Drive-Test-Daten, gemäss der Drive-Test-Objekt-Information, welche in der Drive-Test-Instruktion enthalten ist; sowie
Instruieren (502), durch die Basisstation, des Terminals entsprechend der bestimmten Information des Terminals zum Erfassen der Drive-Test-Daten entsprechend der zweiten Typeninformation.

6. Das Verfahren gemäss Anspruch 1 oder 5, wobei im Falle, dass die Drive-Test-Instruktion die zweite Typeninformation der durch das Terminal erfassten Drive-Test-Daten enthält, das Verfahren aufweist:
Instruieren, durch die Basisstation, des Terminals zum Erfassen von Information der Zeit, zu welcher die der zweiten Typeninformation entsprechenden Drive-Test-Daten erfasst werden; und/oder
Instruieren, durch die Basisstation, des Terminals zum Erfassen von Information von einer Position, an welcher das Terminal gerade angeordnet ist, wobei die Information der Position dazu benutzt wird, die der zweiten Typeninformation entsprechenden Drive-Test-Daten zu identifizieren.

7. Das Verfahren gemäss Anspruch 3 oder 5, wobei die Drive-Test-Objekt-Information, welche in der Drive-Test-Instruktion enthalten ist, Regioneninformation oder Terminalinformation aufweist;
im Falle, dass die Drive-Test-Objekt-Information die Regioneninformation aufweist, die bestimmte Information des Terminals zum Erfassen der Drive-Test-Daten Information eines Terminals innerhalb einer Region ist, welche der Regioneninformation entspricht; sowie
im Falle, dass die Drive-Test-Objekt-Information die Terminalinformation aufweist, die bestimmte Information des Terminals zum Erfassen der Drive-Test-Daten Terminalinformation ist, welche in der Drive-Test-Objekt-Information enthalten ist.

8. Ein System zum Erfassen von Drive-Test-Daten, **dadurch gekennzeichnet, dass** es aufweist:
eine Basisstation (801), welche dazu konfiguriert ist, eine Drive-Test-Instruktion zu empfangen, die Typeninformation der Drive-Test-Daten aufweist, welche zur Erfassung instruiert wird; Erfassen der der ersten Typeninformation entsprechenden Drive-Test-Daten im Falle, dass die Drive-Test-Instruktion die erste Typeninformation der durch die Basisstation erfassten Drive-Test-Daten enthält; Instruieren eines Terminals, Drive-Test-Daten zu erfassen, die der zweiten Typeninformation entsprechen, und die vom Terminal erfassten Drive-Test-Daten zu erfassen, im Falle, dass die Drive-Test-Instruktion die zweite Typeninformation der durch das Terminal erfassten Drive-Test-Daten enthält; und
ein Terminal (802), welches dazu konfiguriert ist, die der zweiten Typeninformation entsprechenden Drive-Test-Daten zu erfassen und die erfassten Drive-Test-Daten der Basisstation gemäss einer Instruktion von der Basisstation zu berichten;
wobei die erste Typeninformation bestimmt wird gemäss Typeninformation von Daten, welche durch einen Scheduler der Basisstation gespeichert werden.

9. Eine Vorrichtung zum Erfassen von Drive-Test-Daten, **dadurch gekennzeichnet, dass** sie aufweist:
eine Empfangseinheit (601), welche dazu konfiguriert ist, eine Drive-Test-Instruktion zu empfangen, die Typeninformation der Drive-Test-Daten enthält, welche für die Erfassung instruiert werden;
eine erste Erfassungseinheit (602), welche dazu konfiguriert ist, die der ersten Typeninformation entsprechenden Drive-Test-Daten zu erfassen, im Fall, dass die Drive-Test-Instruktion die erste Typeninformation der durch die Basisstation erfassten Drive-Test-Daten enthält; sowie
eine zweite Erfassungseinheit (603), welche dazu konfiguriert ist, ein Terminal zu instruieren, Drive-Test-Daten zu erfassen, welche der zweiten Typeninformation entsprechen, und die durch das Terminal erfassten Drive-Test-Daten zu erfassen, im Falle, dass die Drive-Test-Instruktion die zweite Typeninformation der durch das Terminal erfassten Drive-Test-Daten enthält;
wobei die erste Typeninformation bestimmt wird gemäss Typeninformation von Daten, welche durch einen Scheduler der Basisstation gespeichert werden.

10. Die Vorrichtung gemäss Anspruch 9, wobei die erste Erfassungseinheit konfiguriert ist zum:
Erfassen der der ersten Typeninformation entsprechenden Drive-Test-Daten, im Falle, dass die Drive-Test-Instruktion die erste Typeninformation enthält, welche gemäss der Typeninformation von Daten bestimmt wird, die durch den einen Scheduler der Basisstation gespeichert werden.

11. Die Vorrichtung gemäss Anspruch 10, wobei die erste Erfassungseinheit konfiguriert ist zum:
Bestimmen von Information des Terminals zum Erfassen der Drive-Test-Daten gemäss Drive-Test-Objekt-Information, welche in der Drive-Test-Instruktion enthalten ist, und Erfassen von Daten, welche der ersten Typeninformation entsprechen, von den Daten, welche durch den Scheduler gespeichert werden, welche der Information des Terminals entsprechen, als Drive-Test-Daten.

12. Die Vorrichtung gemäss Anspruch 9 oder 11, wobei die erste Erfassungseinheit auch dazu konfiguriert ist, im Falle, dass die Drive-Test-Instruktion die erste Typeninformation der von der Basisstation erfassten Drive-Test-Daten enthält, Information von Zeit zu bestimmen, zu welcher die der ersten Typeninformation entsprechenden Drive-Test-Daten erfasst werden, und die der ersten Typeninformation entsprechenden, erfassten Drive-Test-Daten mittels der Information der Zeit zu identifizieren; und/oder Information des Terminals zu bestimmen, um Drive-Test-Daten gemäss der Drive-Test-Objekt-Information zu erfassen, welche in der Drive-Test-Instruktion enthalten ist, die Information einer Position zu bestimmen, an welcher das der Terminalinformation entsprechende Terminal angeordnet ist, und die der ersten Typeninformation entsprechenden, erfassten Drive-Test-Daten mittels der Information der Position zu identifizieren.

13. Die Vorrichtung gemäss Anspruch 9, wobei die zweite Erfassungseinheit konfiguriert ist zum:
Bestimmen von Information des Terminals zum Erfassen von Drive-Test-Daten gemäss der Drive-Test-Objekt-Information, welche in der Drive-Test-Instruktion enthalten ist, und Instruieren des Terminals entsprechend der bestimmten Information des Terminals zum Erfassen der Drive-Test-Daten entsprechend der zweiten Typeninformation.

14. Die Vorrichtung gemäss Anspruch 9 oder 13, wobei die zweite Erfassungseinheit konfiguriert ist zum:
Instruieren des Terminals zum Bestimmen von Information der Zeitinformation, zu welcher die Drive-Test-Daten entsprechend der zweiten Typeninformation erfasst werden, im Falle, dass die Drive-Test-Instruktion die zweite Typeninformation der durch das Terminal erfassten Drive-Test-Daten aufweist, wobei die Zeitinformation dazu benutzt wird, die der zweiten Typeninformation entsprechenden Drive-Test-Daten zu identifizieren; und/oder Instruieren des Terminals zum Bestimmen von Information der Position, an welcher das Terminal gerade angeordnet ist, wobei die Information der Position dazu benutzt wird, die der zweiten Typeninformation entsprechenden Drive-Test-Daten zu identifizieren.

15. Eine Basisstation, aufweisend die Vorrichtung gemäss einem der Ansprüche 9 bis 14.

## Revendications

1. Procédé d'acquisition de données de test de couverture en véhicule, **caractérisé en ce qu'**il comprend :
la réception (301), par une station de base, d'une instruction de test de couverture en véhicule comprenant des informations de type relatives aux données de test de couverture en véhicule pour lesquelles une instruction d'acquisition a été donnée ;
l'acquisition (302), par la station de base, des données de test de couverture en véhicule correspondant à des premières informations de type, dans le cas où l'instruction de test de couverture en véhicule comprend les premières informations de type relatives aux données de test de couverture en véhicule acquises par la station de base ; et
l'instruction donnée (302), par la station de base, à un terminal d'acquérir des données de test de couverture en véhicule correspondant à des deuxièmes informations de type et l'acquisition des données de test de couverture en véhicule acquises par le terminal, dans le cas où l'instruction de test de couverture en véhicule comprend les deuxièmes informations de type relatives aux données de test de couverture en véhicule acquises par le terminal ;
les premières informations de type étant déterminées selon des informations de type relatives à des données stockées par un ordonnanceur de la station de base.

2. Procédé selon la revendication 1,
dans lequel les premières informations de type comprennent :
des informations relatives à un débit du terminal à des niveaux de service différents ; et/ou
des informations relatives à un délai de transmission du terminal à des niveaux de service différents ; et/ou
des informations relatives à un taux de perte de paquets du terminal à des niveaux de service différents.

3. Procédé selon la revendication 2, dans lequel l'acquisition, par la station de base, de données de test de couverture en véhicule correspondant à des premières informations de type comprend :
la détermination (401), par la station de base, d'informations relatives au terminal pour l'acquisition des données de test de couverture en véhicule, selon des informations d'objet de test de couverture en véhicule comprises dans l'instruction de test de couverture en véhicule ; et
l'acquisition (402), par la station de base, comme données de test de couverture en véhicule, de données correspondant aux premières informations de type, à partir des données stockées par l'ordonnanceur correspondant aux informations relatives au terminal.

4. Procédé selon l'une quelconque des revendications 1 à 3, lequel procédé, dans le cas où l'instruction de test de couverture en véhicule comprend les premières informations de type relatives aux données de test de couverture en véhicule acquises par la station de base, comprend en outre :
la détermination, par la station de base, d'informations relatives au temps auquel les données de test de couverture en véhicule correspondant aux premières informations de type sont acquises, et l'identification des données de test de couverture en véhicule acquises correspondant aux premières informations de type par les informations relatives au temps ; et/ou
la détermination, par la station de base, d'informations relatives au terminal pour l'acquisition des données de test de couverture en véhicule, selon les informations d'objet de test de couverture en véhicule comprises dans l'instruction de test de couverture en véhicule, la détermination d'informations relatives à une position actuellement occupée par le terminal, et l'identification des données de test de couverture en véhicule acquises correspondant aux premières informations de type par les informations relatives à la position.

5. Procédé selon la revendication 1, dans lequel l'instruction donnée, par la station de base, à un terminal d'acquérir des données de test de couverture en véhicule correspondant aux deuxièmes informations de type comprend :
la détermination (501), par la station de base, d'informations relatives au terminal pour l'acquisition des données de test de couverture en véhicule, selon les informations d'objet de test de couverture en véhicule comprises dans l'instruction de test de couverture en véhicule ; et
l'instruction donnée (502), par la station de base, au terminal correspondant aux informations relatives au terminal déterminées d'acquérir les données de test de couverture en véhicule correspondant aux deuxièmes informations de type.

6. Procédé selon la revendication 1 ou 5, lequel procédé, dans le cas où l'instruction de test de couverture en véhicule comprend les deuxièmes informations de type relatives aux données de test de couverture en véhicule acquises par le terminal, comprend en outre :
l'instruction donnée, par la station de base, au terminal de déterminer des informations relatives au temps auquel les données de test de couverture en véhicule correspondant aux deuxièmes informations de type sont acquises ; et/ou
l'instruction donnée, par la station de base, au terminal de déterminer des informations relatives à une position actuellement occupée par le terminal, les informations relatives à la position servant à identifier les données de test de couverture en véhicule correspondant aux deuxièmes informations de type.

7. Procédé selon la revendication 3 ou 5, dans lequel les informations d'objet de test de couverture en véhicule comprises dans l'instruction de test de couverture en véhicule comprennent des informations de région ou des informations de terminal ;
dans le cas où les informations d'objet de test de couverture en véhicule comprennent les informations de région, les informations relatives au terminal déterminées pour l'acquisition des données de test de couverture en véhicule consistent en des informations relatives à un terminal au sein d'une région correspondant aux informations de région ; et
dans le cas où les informations d'objet de test de couverture en véhicule comprennent les informations de terminal, les informations relatives au terminal déterminées pour l'acquisition des données de test de couverture en véhicule consistent en des informations de terminal comprises dans les informations d'objet de test de couverture en véhicule.

8. Système permettant l'acquisition de données de test de couverture en véhicule, **caractérisé en ce qu'**il comprend :
une station de base (801), configurée pour recevoir une instruction de test de couverture en véhicule comprenant des informations de type relatives à des données de test de couverture en véhicule pour lesquelles une instruction d'acquisition a été donnée ; acquérir les données de test de couverture en véhicule correspondant à des premières informations de type dans le cas où l'instruction de test de couverture en véhicule comprend les premières informations de type relatives aux données de test de couverture en véhicule acquises par la station de base ; et donner pour instruction à un terminal d'acquérir des données de test de couverture en véhicule correspondant à des deuxièmes informations de type et acquérir les données de test de couverture en véhicule acquises par le terminal dans le cas où l'instruction de test de couverture en véhicule comprend des deuxièmes informations de type relatives à des données de test de couverture en véhicule acquises par un terminal ; et
un terminal (802), configuré pour acquérir les données de test de couverture en véhicule correspondant aux deuxièmes informations de type et notifier les données de test de couverture en véhicule acquises à la station de base selon une instruction émanant de la station de base ;
les premières informations de type étant déterminées selon des informations de type relatives à des données stockées par un ordonnanceur de la station de base.

9. Dispositif permettant l'acquisition de données de test de couverture en véhicule, **caractérisé en ce qu'**il comprend :
une unité de réception (601), configurée pour recevoir une instruction de test de couverture en véhicule comprenant des informations de type relatives aux données de test de couverture en véhicule pour lesquelles une instruction d'acquisition a été donnée ;
une première unité d'acquisition (602), configurée pour acquérir les données de test de couverture en véhicule correspondant à des premières informations de type, dans le cas où l'instruction de test de couverture en véhicule comprend les premières informations de type relatives aux données de test de couverture en véhicule acquises par la station de base ; et
une deuxième unité d'acquisition (603), configurée pour donner pour instruction à un terminal d'acquérir des données de test de couverture en véhicule correspondant à des deuxièmes informations de type et acquérir les données de test de couverture en véhicule acquises par le terminal, dans le cas où l'instruction de test de couverture en véhicule comprend les deuxièmes informations de type relatives aux données de test de couverture en véhicule acquises par un terminal ;
les premières informations de type étant déterminées selon des informations de type relatives à des données stockées par un ordonnanceur de la station de base.

10. Dispositif selon la revendication 9, dans lequel la première unité d'acquisition est configurée pour :
acquérir les données de test de couverture en véhicule correspondant aux premières informations de type, dans le cas où l'instruction de test de couverture en véhicule comprend les premières informations de type déterminées selon les informations de type relatives à des données stockées par un ordonnanceur de la station de base.

11. Dispositif selon la revendication 10, dans lequel la première unité d'acquisition est configurée pour :
déterminer des informations relatives au terminal pour l'acquisition des données de test de couverture en véhicule selon des informations d'objet de test de couverture en véhicule comprises dans l'instruction de test de couverture en véhicule, et acquérir, comme données de test de couverture en véhicule, des données correspondant aux premières informations de type, à partir des données stockées par l'ordonnanceur correspondant aux informations relatives au terminal.

12. Dispositif selon la revendication 9 ou 11, dans lequel la première unité d'acquisition est également configurée pour, dans le cas où l'instruction de test de couverture en véhicule comprend les premières informations de type relatives aux données de test de couverture en véhicule acquises par la station de base, déterminer des informations relatives au temps auquel les données de test de couverture en véhicule correspondant aux premières informations de type sont acquises, et identifier les données de test de couverture en véhicule acquises correspondant aux premières informations de type par les informations relatives au temps ; et/ou déterminer des informations relatives au terminal pour l'acquisition de données de test de couverture en véhicule selon les informations d'objet de test de couverture en véhicule comprises dans l'instruction de test de couverture en véhicule, déterminer des informations relatives à une position actuellement occupée par le terminal correspondant aux informations de terminal, et identifier les données de test de couverture en véhicule acquises correspondant aux premières informations de type par les informations relatives à la position.

13. Dispositif selon la revendication 9, dans lequel la deuxième unité d'acquisition est configurée pour :
déterminer des informations relatives au terminal pour l'acquisition de données de test de couverture en véhicule selon les informations d'objet de test de couverture en véhicule comprises dans l'instruction de test de couverture en véhicule, et donner pour instruction au terminal correspondant aux informations relatives au terminal déterminées d'acquérir les données de test de couverture en véhicule correspondant aux deuxièmes informations de type.

14. Dispositif selon la revendication 9 ou 13, dans lequel la deuxième unité d'acquisition est configurée en outre pour :
dans le cas où l'instruction de test de couverture en véhicule comprend les deuxièmes informations de type relatives à des données de test de couverture en véhicule acquises par le terminal, donner pour instruction au terminal de déterminer des informations relatives au temps auquel les données de test de couverture en véhicule correspondant aux deuxièmes informations de type sont acquises, les informations de temps servant à identifier les données de test de couverture en véhicule correspondant aux deuxièmes informations de type ; et/ou donner pour instruction au terminal de déterminer des informations relatives à une position actuellement occupée par le terminal, les informations relatives à la position servant à identifier les données de test de couverture en véhicule correspondant aux deuxièmes informations de type.

15. Station de base, comprenant le dispositif selon l'une quelconque des revendications 9 à 14.
